# EUROPÄISCHE PATENTSCHRIFT

(11) **EP 3 024 688 B1**
(45) Veröffentlichungstag und Bekanntmachung des Hinweises auf die Patenterteilung: **03.01.2018**
(21) Anmeldenummer: 14739356.5
(22) Anmeldetag: 08.07.2014
(51) Int. Cl.: B60L 11/18, B60L 3/00, H01M 10/42, H01M 10/48, H01M 10/625, H01M 10/63, H01M 10/613

(54) **ENERGIESPEICHERANORDNUNG MIT TEMPERATURABHÄNGIGER EINSCHALTUNG VON EINER ZUSTANDSÜBERWACHUNG**
ENERGY STORAGE FEATURING TEMPERATURE-DEPENDENT ACTIVATION OF STATUS MONITORING
SYSTÈME D'ACCUMULATION D'ÉNERGIE DONT LA SURVEILLANCE D'ÉTAT EST DÉCLENCHÉE EN FONCTION DE LA TEMPÉRATURE

(30) Priorität: 26.07.2013 DE 102013012451
(43) Veröffentlichungstag der Anmeldung: 01.06.2016
(73) Patentinhaber: Audi AG, 85045 Ingolstadt (DE)
(72) Erfinder: DORSCH, Johannes, 85057 Ingolstadt (DE)
(74) Vertreter: Lehle, Josef
(86) Internationale Anmeldenummer: PCT/EP2014/001871
(87) Internationale Veröffentlichungsnummer: WO 2015/010772

(56) Entgegenhaltungen:
- US-A- 3 601 679
- US-A- 6 002 240
- US-A1- 2001 002 786
- US-A1- 2012 242 144

## Beschreibung

Die Erfindung betrifft eine Energiespeicheranordnung, umfassend einen elektrischen Energiespeicher, eine diesem zugeordnete Steuereinrichtung, welche im Betriebszustand zur Ermittlung von den Betrieb des Energiespeichers betreffenden Steuerinformationen ausgebildet ist, sowie eine der Steuereinrichtung zugeordnete Schalteinrichtung, welche ausgehend von dem Nichtbetriebszustand der Steuereinrichtung zur Inbetriebnahme der Steuereinrichtung ausgebildet ist.

Derartige Energiespeicheranordnungen sind bekannt und werden beispielsweise in der Kraftfahrzeugtechnik eingesetzt, wobei über den der Energiespeicheranordnung zugehörigen elektrischen Energiespeicher beispielsweise elektrische Energie für ein kraftfahrzeugseitiges elektrisches Antriebsaggregat bereitgestellt wird. Die Steuerung des Energiespeichers erfolgt typischerweise über eine Steuereinrichtung, welche im Betriebszustand entsprechende Steuerinformationen, welche z. B. den Ladezustand des Energiespeichers bzw. Lade- und Entladestrategien des Energiespeichers etc. betreffen, ermittelt. Die Ermittlung der Steuerinformationen erfolgt typischerweise auf Basis einer Temperaturerfassung bzw. Temperaturüberwachung des Energiespeichers. Die Erfassung bzw. Überwachung der Temperatur des Energiespeichers ist deshalb von Bedeutung, weil die Temperatur für Alterungsvorgänge des Energiespeichers und insbesondere für die Erkennung von Schadensfällen des Energiespeichers eine wichtige Rolle spielt.

Entsprechende Steuerinformationen wie auch eine entsprechende Temperaturerfassung bzw. Temperaturüberwachung des Energiespeichers sind jedoch nur bei entsprechender Energieversorgung, d. h. im Betriebszustand bzw. im Betrieb, der Steuereinrichtung möglich. Es besteht daher insbesondere im Hinblick auf die Temperaturerfassung bzw. Temperaturüberwachung ein Bedarf nach einer technischen Lösung, welche eine entsprechende Temperaturerfassung bzw. Temperaturüberwachung auch in dem Falle einer nicht in Betrieb genommenen Steuereinrichtung ermöglicht. Das Patentdokument US-A-6 002 240 offenbart eine Energiespeicheranordnung gemäß des Oberbegriffes des Anspruchs 1. Der Erfindung liegt damit die Aufgabe zugrunde, eine verbesserte Energiespeicheranordnung anzugeben.

Die Aufgabe wird durch eine Energiespeicheranordnung der eingangs genannten Art gelöst, welche sich erfindungsgemäß dadurch auszeichnet, dass die Schalteinrichtung wenigstens ein temperaturempfindliches Schaltmittel umfasst, welches bei Überschreiten einer spezifischen Grenztemperatur wenigstens eine Materialeigenschaft derart verändert, dass über die Schalteinrichtung eine Inbetriebnahme der Steuereinrichtung herbeigeführt ist, wobei über die Änderung der Materialeigenschaft des Schaltmittels wenigstens ein elektrischer Stromkreis schließbar ist, über welchen die Steuereinrichtung mit elektrischer Energie versorgbar ist. Die erfindungsgemäße Energiespeicheranordnung umfasst eine besondere, der Steuereinrichtung zugeordnete Schalteinrichtung, über welche eine Inbetriebnahme der Steuereinrichtung ausgehend von ihrem Nichtbetriebszustand herbeiführbar ist. In dem Nichtbetriebszustand ist die Steuereinrichtung typischerweise nicht an ein Energieversorgungsnetz angeschlossen oder wird nicht über ein Energieversorgungsnetz mit elektrischer Energie versorgt. Dies kann beispielsweise daran liegen, dass das Energieversorgungsnetz selbst außer Betrieb genommen ist. Die Inbetriebnahme der Steuereinrichtung wird über ein der Schalteinrichtung zugehöriges Schaltmittel, d. h. durch entsprechende aus einer temperaturbedingten Änderung der Materialeigenschaften des Schaltmittels resultierende Schaltvorgänge des Schaltmittels, realisiert. Das Schaltmittel ist derart ausgebildet bzw. beschaffen, dass es bei Überschreiten einer spezifischen Grenztemperatur wenigstens eine Materialeigenschaft derart verändert, dass über die Schalteinrichtung eine Inbetriebnahme der Steuereinrichtung herbeigeführt wird.

Das Schaltmittel ändert die Materialeigenschaft(en) also in Abhängigkeit seiner Temperatur derart, dass hierdurch mittelbar oder unmittelbar eine inbetriebnahme der Steuereinrichtung erfolgt. Die Schalteinrichtung ist insofern derart ausgebildet, die Inbetriebnahme der Steuereinrichtung (allein) in Abhängigkeit der Temperatur des Schaltmittels durchzuführen. Hieraus ergibt sich der Vorteil, dass die Steuereinrichtung nicht ständig in Betrieb, d. h. aktiviert, sein muss, um entsprechende Steuerinformationen, d. h. insbesondere eine Erfassung bzw. Überwachung der Temperatur des Energiespeichers, zu ermitteln. Hieraus folgt gleichermaßen, dass es nicht erforderlich ist, ein die Steuereinrichtung mit Energie versorgendes Energieversorgungsnetz ständig in Betrieb zu halten, um die Steuereinrichtung entsprechend mit elektrischer Energie zu versorgen. Bei nicht in Betrieb genommener, d. h. deaktivierter, Steuereinrichtung wird in Fällen einer übermäßigen Temperaturentwicklung, d. h. insbesondere einer Temperaturentwicklung, welche mit dem Überschreiten der schaltmittelspezifischen Grenztemperatur einhergeht, das Schaltmittel in seinen Materialeigenschaften derart verändert, dass es eine Inbetriebnahme, d. h. Aktivierung, der Steuereinrichtung herbeiführt. Wie sich im Weiteren ergibt, kann die temperaturabhängige Veränderung einer oder mehrerer Materialeigenschaften ein materialimmanentes Charakteristikum des das Schaltmittel bildenden Materials sein.

Das erfindungsgemäße Prinzip ermöglicht sonach insbesondere auch in Situationen, in denen die eigentlich zur Erfassung und Überwachung der Temperatur vorgesehene Steuereinrichtung nicht mit elektrischer Energie versorgt bzw. außer Betrieb ist, eine zumindest qualitative Erfassung bzw. Überwachung der Temperatur des Energiespeichers. Dies ergibt sich dadurch, dass die Steuereinrichtung über die Schalteinrichtung respektive das dieser zugehörige Schaltmittel jedenfalls dann in Betrieb genommen wird, wenn sich das Schaltmittel auf eine oberhalb der spezifischen Grenztemperatur liegende Temperatur erwärmt. Wie erwähnt, erfolgt in diesem Fall eine durch die strukturelle Ausbildung bzw. Beschaffenheit des Schaltmittels bedingte Änderung der Materialeigenschaften des Schaltmittels, über welche Änderung das Schaltmittel derart auf die Steuereinrichtung wirkt, dass eine Inbetriebnahme der Steuereinrichtung herbeigeführt wird. Die Steuereinrichtung wird sonach über das Schaltmittel "geweckt" und kann im Weiteren beispielsweise die Temperaturerfassung bzw. Temperaturüberwachung des Energiespeichers sowie gegebenenfalls erforderliche Maßnahmen zur Kühlung des Energiespeichers vornehmen.

Unter einer Änderung der Materialeigenschaften des Schaltmittels kann erfindungsgemäß zu verstehen sein, dass sich in Abhängigkeit der Temperatur, d. h. insbesondere bei Überschreiten der spezifischen Grenztemperatur, eine bestimmte physikalische Eigenschaft respektive ein bestimmtes physikalisches Verhalten des das Schaltmittel bildenden Materials ändert. Wie sich im Weiteren ergibt, kann bzw. können sich beispielsweise das magnetische Verhalten respektive die magnetischen Eigenschaften des das Schaltmittel bildenden Materials in Abhängigkeit der Temperatur, d. h. insbesondere bei Überschreiten der spezifischen Grenztemperatur, ändern. Denkbar ist es beispielsweise auch, dass sich die elektrische Leitfähigkeit des das Schaltmittel bildenden Materials in Abhängigkeit der Temperatur, d. h. insbesondere bei Überschreiten der spezifischen Grenztemperatur, ändert.

Unter einer Änderung der Materialeigenschaften des Schaltmittels kann jedoch erfindungsgemäß auch zu verstehen sein, dass sich in Abhängigkeit der Temperatur, d. h. insbesondere bei Überschreiten der spezifischen Grenztemperatur, die Abmessungen und/oder die Form und/oder das Volumen des Schaltmittels ändern. Wie sich im Weiteren ergibt, kann sich insbesondere die Form des Schaltmittels in Abhängigkeit der Temperatur, d. h. insbesondere bei Überschreiten der spezifischen Grenztemperatur, ändern.

Zweckmäßig können mehrere entsprechende Schalteinrichtungen bzw. Schaltmittel vorgesehen sein, welche bevorzugt verteilt um den Energiespeicher angeordnet sind. Derart ist die Zuverlässigkeit des beschriebenen Prinzips erhöht.

Unter einem Energiespeicher ist erfindungsgemäß eine Energiespeicherzelle bzw. mehrere modul- oder stapelartig zusammengefasste Energiespeicherzellen zu verstehen. Die einzelnen Energiespeicherzellen sind typischerweise in einem Gehäuseteil aufgenommen. Die Steuereinrichtung, die Schalteinrichtung bzw. das dieser zugehörige Schaltmittel sind typischerweise ebenso in diesem Gehäuseteil aufgenommen.

In einer bevorzugten Ausführungsform der Erfindung ist es vorgesehen, dass über die Änderung der Materialeigenschaft(en) des Schaltmittels wenigstens ein elektrischer Stromkreis schließbar ist bzw. geschlossen wird, über welchen die Steuereinrichtung mit elektrischer Energie versorgbar ist. Die Schalteinrichtung respektive das diesem zugehörige Schaltmittel ist sonach Teil eines elektrischen Stromkreises, an welchen auch die Steuereinrichtung angeschlossen ist. Der elektrische Stromkreis kann wiederum Teil eines elektrischen Energieversorgungsnetzes sein, an welchem auch die Steuereinrichtung angeschlossen ist bzw. über welches die Steuereinrichtung mit elektrischer Energie versorgbar ist, d. h. im Betrieb mit elektrischer Energie versorgt wird. Die Inbetriebnahme der Steuereinrichtung erfolgt also dadurch, dass eine Stromversorgung der Steuereinrichtung über ein Schließen eines elektrischen Stromkreises hergestellt wird. Die Steuereinrichtung ist vor ihrer Inbetriebnahme, d. h. in dem außer Berieb genommenen Zustand, daher typischerweise nicht mit elektrischer Energie versorgt. Wie im Weiteren noch erläutert wird, sind in Abhängigkeit der jeweils konkreten Ausführung des Schaltmittels unterschiedliche Prinzipien möglich, wie das durch die Änderung der Materialeigenschaft(en) des Schaltmittels bedingte Schließen des Stromkreises realisiert ist.

Es ist zweckmäßig vorgesehen, wenn die Steuereinrichtung bei Inbetriebnahme über das Schließen des Stromkreises dazu ausgebildet ist, wenigstens eine Maßnahme zur Temperierung, insbesondere Kühlung, des Energiespeichers herbeizuführen und/oder wenigstens eine Warninformation auszugeben. In diesem Zusammenhang ist es möglich, dass bei Schließen des Stromkreises ein besonderes Aktivierungssignal in der Steuereinrichtung erzeugt wird, auf Basis dessen eine bestimmte, in der Steuereinrichtung, z. B. durch einen besonderen Algorithmus, hinterlegte Sicherheitsroutine abgearbeitet wird, welche die beschriebenen Vorgänge, d. h. die Durchführung wenigstens einer Maßnahme zur Kühlung des Energiespeichers, worunter gegebenenfalls auch ein Löschvorgang zu verstehen ist, respektive die Ausgabe entsprechender Warninformationen, beinhaltet. Der Stromkreis kann sonach einen Teil eines bestimmten elektrischen Anschlusses bzw. Signaleingangs der Steuereinrichtung bilden, welcher zusätzlich zu einem elektrischen Anschluss bzw. Signaleingang, über welchen die Steuereinrichtung im Betrieb mit elektrischer Energie bzw. elektrischen Signalen versorgt wird, vorhanden ist. Die Steuereinrichtung kann sonach an mehrere elektrische Stromkreise bzw. mehrere elektrische Energieversorgungsnetze angeschlossen sein, wobei ein Stromkreis bzw. ein Energieversorgungsnetz zur Versorgung der Steuereinrichtung im Betrieb mit elektrischer Energie versorgt, wohingegen ein anderer Stromkreis bzw. ein anderes Energieversorgungsnetz zu der erfindungsgemäß mittels der Schalteinrichtung erfolgenden Inbetriebnahme der Steuereinrichtung vorgesehen ist. Der zuletzt beschriebene Stromkreis wird also nur bei Überschreiten der spezifischen Grenztemperatur des Schaltmittels geschlossen, so dass über diesen Stromkreis nur in diesem Fall eine, insbesondere der Aktivierung und Durchführung entsprechender Maßnahmen zur Temperaturerfassung bzw. -Überwachung und Kühlung des Energiespeichers dienende, Energieversorgung der Steuereinrichtung erfolgt.

Die vorstehend beschriebene Warninformation kann über ein Ausgabemittel einer die Energiespeicheranordnung umfassenden Vorrichtung, insbesondere eines Kraftfahrzeugs, und/oder an die Umgebung der die Energiespeicheranordnung umfassenden Vorrichtung, insbesondere eines Kraftfahrzeugs, gebbar sein. Grundsätzlich ist es denkbar, dass es sich bei der Warninformation um eine akustische und/oder haptische und/oder optische Informations- bzw. Signalgabe handelt. Die Steuereinrichtung kommuniziert daher mit entsprechenden Ausgabemitteln, wie z. B. Lautsprechern, Vibrationseinrichtungen, Bildschirmen etc. der die Energiespeicheranordnung umfassenden Vorrichtung. Die Warninformationen sind daher typischerweise an einen Bediener der Vorrichtung gerichtet. Die Warninformationen können jedoch alternativ oder ergänzend auch an die Umgebung der Vorrichtung gegeben werden. Dies kann beispielsweise durch die Gabe akustischer und/oder optischer Informationen bzw. Signale an das Umfeld der Vorrichtung, d. h. insbesondere ein Fahrzeugumfeld, erfolgen. So kann die Vorrichtung beispielsweise akustische und/oder optische Signale an ihre Umgebung abgeben. Denkbar ist es auch, die Warninformation über entsprechende Sende- und/oder Empfangseinrichtungen, d. h. insbesondere über ein Kommunikationsnetzwerk, wie z. B. UMTS, WLAN etc., an entsprechende, im Umfeld der Vorrichtung befindliche Objekte zu übermitteln. Sofern die Vorrichtung ein Kraftfahrzeug ist, d. h. die Energiespeicheranordnung Teil eines Kraftfahrzeugs ist, ist es daher möglich, die Warninformation z. B. mittels einer so genannten Car2Car-Kommunikation an weitere, im Fahrzeugumfeld befindliche Kraftfahrzeuge zu übermitteln. Im Allgemeinen kann die Warninformation auch an andere an das Kommunikationsnetzwerk angeschlossene Einrichtungen bzw. Kommunikationspartner, wie z. B. Rettungsdienste, Polizei, Reparatur- oder Service-Werkstätten oder an den Fahrzeughalter, übermittelt werden.

In einer beispielhaften Ausführungsform kann das Schaltmittel in Abhängigkeit der Temperatur seine magnetischen Eigenschaften verändern, wobei es unterhalb einer spezifischen Grenztemperatur (ferro)magnetische Eigenschaften und oberhalb der spezifischen Grenztemperatur keine (ferro)magnetischen Eigenschaften aufweist. Das Schaltmittel ist sonach aus einem bestimmten Material gebildet, welches in Abhängigkeit der Temperatur, d. h. bei Überschreiten der spezifischen Grenztemperatur, welche hier als Curie-Temperatur zu bezeichnen ist bzw. mit dieser zusammenfällt, seine magnetischen Eigenschaften verändert. Die vorteilhafte Einbindung des Schaltmittels in den beschriebenen elektrischen Stromkreis kann beispielsweise dadurch erfolgen, dass das Schaltmittel unterhalb der spezifischen Grenztemperatur mit einem magnetischen, elektrisch leitfähigen Element (Schaltelement) des Stromkreises derart magnetisch wechselwirkt, dass das Element derart positioniert ist, dass der Stromkreis geöffnet bzw. unterbrochen ist. Oberhalb der Grenztemperatur ist das magnetische, elektrische leitfähige Element aufgrund des Verlustes der magnetischen Eigenschaften des Schaltmittels und damit der nicht mehr bestehenden magnetischen Wechselwirkung mit dem Schaltmittel derart positioniert, dass der Stromkreis geschlossen ist.

In dieser Ausführungsform kann das Schaltmittel z. B. aus einer Nickel-Eisen-Legierung gebildet sein. Die Curie-Temperatur der Legierung kann beispielsweise in einem Bereich zwischen 20 und 100°C, bevorzugt in einem Bereich zwischen 50 und 80°C, liegen. Selbstverständlich sind andere Materialien, welche ein vergleichbares Verhalten zeigen, grundsätzlich ebenso verwendbar. Auch die Curie-Temperatur kann grundsätzlich höher oder niedriger liegen.

In einer weiteren beispielhaften Ausführungsform kann das Schaltmittel in Abhängigkeit der Temperatur seine elektrische Leitfähigkeit verändern, wobei es unterhalb der spezifischen Grenztemperatur elektrisch isolierende Eigenschaften und oberhalb der spezifischen Grenztemperatur elektrisch leitfähige Eigenschaften aufweist. Das Schaltmittel ist sonach aus einem bestimmten Material gebildet, welches in Abhängigkeit der Temperatur, d. h. bei Überschreiten der spezifischen Grenztemperatur, seine elektrischen Eigenschaften, d. h. insbesondere seine elektrische Leitfähigkeit, verändert. Die vorteilhafte Einbindung des Schaltmittels in den beschriebenen elektrischen Stromkreis kann beispielsweise dadurch erfolgen, dass sich das Schaltmittel unterhalb der spezifischen Grenztemperatur elektrisch isolierend verhält, d. h. als elektrischer Widerstand agiert, so dass der Stromkreis durch das Schaltmittel unterbrochen ist. Oberhalb der spezifischen Grenztemperatur verhält sich das Schaltmittel elektrisch leitend, d. h. agiert als elektrischer Leiter, so dass der Stromkreis geschlossen ist.

In dieser Ausführungsform kann das Schaltmittel aus einem Halbleiter, insbesondere Heißleiter, bevorzugt Fe₂O₃, ZnTiO₄, MgCr₂O₄, gebildet sein. Die Grenztemperatur kann ebenso in einem Bereich zwischen 20 und 100°C, bevorzugt in einem Bereich zwischen 50 und 80°C, liegen. Selbstverständlich sind auch hier andere Materialien, welche ein vergleichbares Verhalten zeigen, grundsätzlich ebenso verwendbar. Auch die Grenztemperatur kann hier grundsätzlich höher oder niedriger liegen.

In einer weiteren beispielhaften Ausführungsform kann das Schaltmittel aus einem Bitmetallstreifen gebildet sein oder einen Bimetallstreifen umfassen, welcher bei Überschreiten der spezifischen Grenztemperatur eine bestimmte Formänderung zeigt. Bimetallstreifen sind typischerweise aus zwei oder mehr unterschiedlichen Metallen gebildet, welche fest miteinander verbunden sind. Die Metalle unterscheiden sich in ihren thermischen Längenausdehnungskoeffizienten und zeigen somit unter Einfluss von Temperatur ein unterschiedliches Ausdehnungsverhalten, welches zu einer Formänderung, typischerweise einer Verbiegung, des Bimetallstreifens insgesamt führt. Das Schaltmittel ist in dieser Ausführungsform sonach aus unterschiedlichen Metallen gebildet, welche in Abhängigkeit der Temperatur, d. h. bei Überschreiten der spezifischen Grenztemperatur, unterschiedliche Längenausdehnungen zeigen und derart eine Formänderung des Schaltmittels herbeiführen. Die vorteilhafte Einbindung des Schaltmittels in den beschriebenen elektrischen Stromkreis kann hier beispielsweise dadurch erfolgen, dass das Schaltmittel unterhalb der spezifischen Grenztemperatur eine Form einnimmt, bei welcher der Stromkreis durch das Schaltmittel oder ein mit diesem gekoppeltes Element (Schaltelement) unterbrochen ist. Oberhalb der spezifischen Grenztemperatur kann das Schaltmittel eine Form einnehmen, bei welcher der Stromkreis durch das Schaltmittel oder ein mit diesem gekoppeltes Element geschlossen ist.

In dieser Ausführungsform kann das Schaltmittel beispielsweise aus einem Streifen aus Zink und einem mit diesem verbundenen Streifen aus Stahl gebildet sein oder entsprechende Streifen, allgemein Materialabschnitte, umfassen. Die Grenztemperatur kann auch hier in einem Bereich zwischen 20 und 100°C, bevorzugt in einem Bereich zwischen 50 und 80°C, liegen. Selbstverständlich sind auch hier andere Materialien, insbesondere Metalle, welche ein vergleichbares Verhalten zeigen, grundsätzlich ebenso verwendbar. Auch die spezifische Grenztemperatur kann grundsätzlich höher oder niedriger liegen.

Die Erfindung betrifft ferner ein Kraftfahrzeug, welches wenigstens eine wie vorstehend beschriebene Energiespeicheranordnung umfasst. Demzufolge gelten bezüglich des erfindungsgemäßen Kraftfahrzeugs sämtliche Ausführungen bezüglich der erfindungsgemäßen Energiespeicheranordnung sowie deren möglicher Ausführungsformen analog. Die Energiespeicheranordnung respektive der dieser zugehörige Energiespeicher ist insbesondere zur Versorgung eines Antriebsaggregats der Kraftfahrzeugs, wie z. B. einem Elektromotor, mit elektrischer Energie vorgesehen. Der Energiespeicher ist demnach bevorzugt eine Traktionsbatterie.

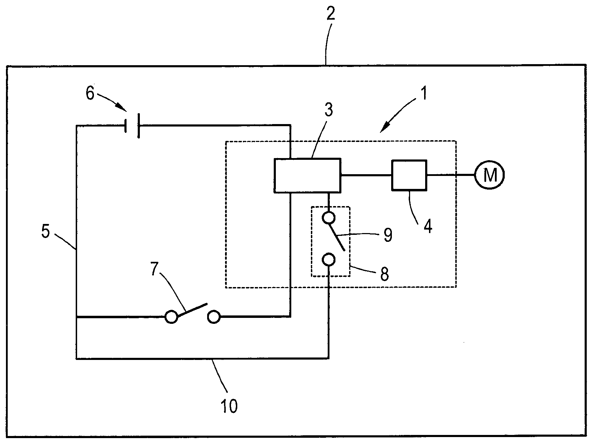

Weitere Vorteile, Merkmale und Einzelheiten der Erfindung ergeben sich aus den im Folgenden beschriebenen Ausführungsbeispielen sowie anhand der Zeichnung. Die einzige Figur zeigt eine Prinzipdarstellung einer Energiespeicheranordnung gemäß einem Ausführungsbeispiel der Erfindung als Teil eines Kraftfahrzeugs.

Die Figur zeigt eine Prinzipdarstellung einer Energiespeicheranordnung 1 gemäß einem Ausführungsbeispiel der Erfindung als Teil eines Kraftfahrzeugs 2. Die Energiespeicheranordnung 1 umfasst eine Steuereinrichtung 3 und einen Energiespeicher 4 z. B. in Form einer wiederaufladbaren elektrischen Lithium-Ionen-Batterie. Der Energiespeicher 4 dient der Versorgung eines oder mehrerer kraftfahrzeugseitiger Antriebsaggregate, welche durch den schematisch gezeigten Elektromotor angedeutet sind. Der Energiespeicher 4 ist demnach eine Traktionsbatterie.

Die Steuereinrichtung 3 ist im Betriebszustand zur Ermittlung von den Betrieb des Energiespeichers 4 betreffenden Steuerinformationen ausgebildet. Entsprechende Steuerinformationen betreffen beispielsweise den Lade- und Entladebetrieb, d. h. insbesondere entsprechende Lade- und Entladestrategien, des Energiespeichers 4. Entsprechende Steuerinformationen betreffen ebenso die Temperatur bzw. Temperierung, d. h. insbesondere die im Betrieb notwendige Kühlung, des Energiespeichers 4. Demzufolge ist über die Steuereinrichtung 3 eine Temperaturerfassung bzw. -Überwachung des Energiespeichers 4 möglich, so dass dieser im Betrieb der Steuereinrichtung 3 vor temperaturbedingten Alterungserscheinungen bzw. Schädigungen geschützt werden kann.

Die Steuereinrichtung 3 wird im Betrieb des Kraftfahrzeugs 2 über ein Energieversorgungsnetz 5 bzw. Bordnetz des Kraftfahrzeugs 2 mit elektrischer Energie versorgt. In dem Energieversorgungsnetz 5 ist neben diversen elektrische Energie verbrauchenden Verbrauchern (nicht gezeigt) auch ein Energiespeicher 6, typischerweise in Form einer so genannten 12V-Batterie, geschalten, welcher die Steuereinrichtung 3 im Betrieb mit elektrischer Energie versorgt. Im Betrieb des Kraftfahrzeugs 2 ist das Schaltmittel 7, welches beispielsweise eine Zündung andeuten soll, geschlossen, die Steuereinrichtung 3 wird über das Energieversorgungsnetz 5 mit elektrische Energie versorgt. Der Betrieb der Steuereinrichtung 3 ist insofern an den Betrieb des Kraftfahrzeugs 2 geknüpft, da nur in diesem Fall eine Energieversorgung über das Energieversorgungsnetz 5 bzw. den Energiespeicher 6 erfolgt.

Die Energiespeicheranordnung 1 umfasst eine der Steuereinrichtung 3 zugeordnete Schalteinrichtung 8. Die Schalteinrichtung 8 ist ausgehend von dem Nichtbetriebszustand der Steuereinrichtung 3 zur Inbetriebnahme der Steuereinrichtung 3 ausgebildet. Hierzu umfasst die Schalteinrichtung 8 ein temperaturempfindliches Schaltmittel 9, welches bei Überschreiten einer spezifischen Grenztemperatur wenigstens eine Materialeigenschaft derart verändert, dass über die Schalteinrichtung 8 eine Inbetriebnahme der Steuereinrichtung 3 herbeigeführt ist bzw. wird.

Die derart erfolgende Inbetriebnahme der Steuereinrichtung 3 ist sonach insbesondere völlig unabhängig von dem Umstand, ob die Steuereinrichtung 3 in Betrieb genommen ist oder nicht in Betrieb genommen ist. Insbesondere ist über die Schalteinrichtung 8 eine Inbetriebnahme der Steuereinrichtung 3 auch in dem Falle, in dem die Steuereinrichtung 3 nicht über das Energieversorgungsnetz 5 mit elektrischer Energie versorgt wird, welcher Fall durch das geöffnete Schaltmittel 7 repräsentiert wird, möglich.

Ersichtlich ist die Schalteinrichtung 8 Teil eines elektrischen Stromkreises, welcher insbesondere den unteren Ast 10 des Energieversorgungsnetzes 5 umfasst. Sofern das der Schalteinrichtung 8 zugehörige temperaturempfindliche Schaltmittel 9 eine Temperatur unterhalb der spezifischen Grenztemperatur aufweist, ist der Stromkreis geöffnet bzw. unterbrochen, d. h. die Steuereinrichtung 3 wird nicht über den Ast 10 mit elektrischer Energie versorgt. Bei Überschreiten der spezifischen Grenztemperatur verändert das Schaltmittel 9 eine oder mehrere Materialeigenschaften derart, dass der Stromkreis geschlossen und über die Schalteinrichtung 8 eine Inbetriebnahme der Steuereinrichtung 3 herbeigeführt und im Weiteren der Betrieb der Steuereinrichtung 3 sichergestellt ist.

Die Steuereinrichtung 3 führt bei einer derartigen, über die Schalteinrichtung 7 realisierten Inbetriebnahme Maßnahmen zur Temperierung, insbesondere zur Kühlung, des Energiespeichers 4 durch. Alternativ oder ergänzend können über die Steuereinrichtung 3 Warninformation ausgegeben werden. In diesem Zusammenhang ist es möglich, dass bei Schließen des Schaltmittels 9 ein besonderes Aktivierungssignal in der Steuereinrichtung 3 erzeugt wird, auf Basis dessen eine bestimmte, in der Steuereinrichtung 3, z. B. durch einen besonderen Algorithmus, hinterlegte Sicherheitsroutine abgearbeitet wird, welche die beschriebenen Vorgänge, d. h. die Durchführung wenigstens einer Maßnahme zur Kühlung des Energiespeichers 4, worunter gegebenenfalls auch ein Löschvorgang zu verstehen ist, respektive die Ausgabe entsprechender Warninformationen, umfasst.

Der über die Schalteinrichtung 8 respektive das dieser zugehörige Schaltmittel 9 schließbare Stromkreis bildet einen bestimmten elektrischen Anschluss bzw. Signaleingang der Steuereinrichtung 3, welcher zusätzlich zu einem elektrischen Anschluss bzw. Signaleingang, über welchen die Steuereinrichtung 3 im Betrieb des Kraftfahrzeugs 2 mit elektrischer Energie bzw. elektrischen Signalen versorgt wird, vorhanden ist. Die Steuereinrichtung 3 ist sonach an mehrere, jeweilige Teil des Energieversorgungsnetzes 5 bildende elektrische Stromkreise angeschlossen, wobei der das Schaltmittel 7 umfassende Stromkreis die Steuereinrichtung 3 im Betrieb des Kraftfahrzeugs 2 mit elektrischer Energie versorgt und der die Schalteinrichtung 8 umfassende Stromkreis zu der mittels der Schalteinrichtung 8 erfolgenden Inbetriebnahme der Steuereinrichtung 3 vorgesehen ist. Der die Schalteinrichtung 8 umfassende Stromkreis wird also nur bei Überschreiten der spezifischen Grenztemperatur des Schaltmittels 9 geschlossen, so dass über diesen Stromkreis nur in diesem Fall eine Energieversorgung der Steuereinrichtung 3 erfolgt.

Die vorstehend beschriebene Warninformation kann über ein Ausgabemittel des Kraftfahrzeugs 2 beispielsweise im Fahrzeuginnenraum und/oder an die Umgebung des Kraftfahrzeugs 2 gebbar sein. Grundsätzlich ist es denkbar, dass es sich bei der Warninformation um eine akustische und/oder haptische und/oder optische Informations- bzw. Signalgabe handelt. Die Steuereinrichtung 3 kommuniziert daher mit entsprechenden kraftfahrzeugseitigen Ausgabemitteln (nicht gezeigt), wie z. B. Lautsprechern, Vibrationseinrichtungen, Bildschirmen etc. Die Warninformation kann jedoch alternativ oder ergänzend auch an die Umgebung des Kraftfährzeugs 2 gegeben werden. Dies kann beispielsweise durch die Gabe akustischer und/oder optischer Informationen bzw. Signale an das Fahrzeugumfeld erfolgen. Denkbar ist es auch, die Warninformation über entsprechende kraftfahrzeugseitige Sende- und/oder Empfangseinrichtungen, d. h. insbesondere über ein Kommunikationsnetzwerk, wie z. B. UMTS, WLAN etc., an entsprechende, im Fahrzeugumfeld befindliche Objekte zu übermitteln. Es ist also möglich, die Warninformation z. B. mittels einer so genannten Car2Car-Kommunikation an weitere, im Fahrzeugumfeld befindliche Kraftfahrzeuge zu übermitteln. Im Allgemeinen kann die Warninformation auch an andere an das Kommunikationsnetzwerk angeschlossene Einrichtungen bzw. Kommunikationspartner, wie z. B. Rettungsdienste, Polizei, Reparatur- oder Service-Werkstätten oder an den Fahrzeughalter, übermittelt werden.

Die Änderung der Materialeigenschaft des der Schalteinrichtung 8 zugehörigen Schaltmittels 9 kann dadurch erfolgen, dass das Schaltmittel 9 in Abhängigkeit der Temperatur seine magnetischen Eigenschaften verändert, wobei es unterhalb der spezifischen Grenztemperatur (ferro)magnetische Eigenschaften und oberhalb der spezifischen Grenztemperatur keine (ferro)magnetischen Eigenschaften aufweist. Das Schaltmittel 9 ist sonach aus einem bestimmten Material gebildet, welches in Abhängigkeit der Temperatur, d. h. bei Überschreiten der spezifischen Grenztemperatur, welche hier als Curie-Temperatur zu bezeichnen ist bzw. mit dieser zusammenfällt, seine magnetischen Eigenschaften verändert. Die Einbindung des Schaltmittels 9 in den elektrischen Stromkreis kann dadurch erfolgen, dass das Schaltmittel 9 unterhalb der spezifischen Grenztemperatur mit einem magnetischen, elektrisch leitfähigen Element (Schaltelement) des Stromkreises derart magnetisch wechselwirkt, dass das Element derart positioniert ist, dass der Stromkreis geöffnet bzw. unterbrochen ist. Oberhalb der Grenztemperatur ist das Element aufgrund des Verlustes der magnetischen Eigenschaften des Schaltmittels 9 und damit der nicht mehr bestehenden magnetischen Wechselwirkung mit dem Schaltmittel 9 derart positioniert, dass der Stromkreis geschlossen ist. Das Schaltmittel 9 kann z. B. aus einer Nickel-Eisen-Legierung gebildet sein. Die Curie-Temperatur der Legierung liegt typischerweise in einem Bereich zwischen 20 und 100°C, bevorzugt in einem Bereich zwischen 50 und 80°C.

Die Änderung der Materialeigenschaft des der Schalteinrichtung 8 zugehörigen Schaltmittels 9 kann auch die elektrischen Eigenschaften des Schaltmittels 9 betreffen. Das Schaltmittel 9 kann also derart ausgebildet sein, dass es in Abhängigkeit der Temperatur seine elektrische Leitfähigkeit verändert, wobei es unterhalb der spezifischen Grenztemperatur elektrisch isolierende Eigenschaften und oberhalb der spezifischen Grenztemperatur elektrisch leitfähige Eigenschaften aufweist. Die Einbindung des Schaltmittels 9 in den elektrischen Stromkreis kann dadurch erfolgen, dass sich das Schaltmittel 9 unterhalb der spezifischen Grenztemperatur elektrisch isolierend verhält, d. h. als elektrischer Widerstand agiert, so dass der Stromkreis durch das Schaltmittel 9 unterbrochen ist. Oberhalb der spezifischen Grenztemperatur verhält sich das Schaltmittel 9 elektrisch leitend, d. h. agiert als elektrischer Leiter, so dass der Stromkreis geschlossen ist. Das Schaltmittel 9 kann hier z. B. aus einem Halbleiter, insbesondere Heißleiter, bevorzugt Fe₂O₃, ZnTiO₄, MgCr₂O₄, gebildet sein. Die Grenztemperatur kann ebenso in einem Bereich zwischen 20 und 100°C, bevorzugt in einem Bereich zwischen 50 und 80°C, liegen.

Die Änderung der Materialeigenschaft des der Schalteinrichtung 8 zugehörigen Schaltmittels 9 kann auch eine Formänderung des Schaltmittels 9 betreffen. Das Schaltmittel 9 kann daher aus einem Bitmetallstreifen gebildet sein oder einen Bimetallstreifen umfassen, welcher bei Überschreiten der spezifischen Grenztemperatur eine bestimmte Formänderung zeigt. Das Schaltmittel 9 ist in dieser Ausführungsform aus unterschiedlichen Metallen gebildet, welche in Abhängigkeit der Temperatur, d. h. bei Überschreiten der spezifischen Grenztemperatur, unterschiedliche Längenausdehnungen zeigen und derart eine Formänderung des Schaltmittels 9 herbeiführen. Die Einbindung des Schaltmittels 9 in den elektrischen Stromkreis kann dadurch erfolgen, dass das Schaltmittel 9 unterhalb der spezifischen Grenztemperatur eine Form einnimmt, bei welcher der Stromkreis durch das Schaltmittel 9 oder ein mit diesem gekoppeltes, elektrisch leitfähiges Element unterbrochen ist. Oberhalb der spezifischen Grenztemperatur kann das Schaltmittel 9 eine Form einnehmen, bei welcher der Stromkreis durch das Schaltmittel 9 oder ein entsprechendes, mit dem Schaltmittel 9 gekoppeltes Element geschlossen ist. Das Schaltmittel 9 kann hier beispielsweise aus einem Streifen oder Materialabschnitt aus Zink und einem mit diesem verbundenen Streifen oder Materialabschnitt aus Stahl gebildet sein. Die Grenztemperatur kann auch hier in einem Bereich zwischen 20 und 100°C, bevorzugt in einem Bereich zwischen 50 und 80°C, liegen.

## Patentansprüche

1. Energiespeicheranordnung (1), umfassend einen elektrischen Energiespeicher (4), eine diesem zugeordnete Steuereinrichtung (3), welche im Betriebszustand zur Ermittlung von den Betrieb des Energiespeichers (4) betreffenden Steuerinformationen ausgebildet ist, sowie eine der Steuereinrichtung (3) zugeordnete Schalteinrichtung (8), welche ausgehend von dem Nichtbetriebszustand der Steuereinrichtung (3) zur Inbetriebnahme der Steuereinrichtung (3) ausgebildet ist,
**dadurch gekennzeichnet,**
**dass** die Schalteinrichtung (8) wenigstens ein temperaturempfindliches Schaltmittel (9) umfasst, welches bei Überschreiten einer spezifischen Grenztemperatur wenigstens eine Materialeigenschaft derart verändert, dass über die Schalteinrichtung (7) eine Inbetriebnahme der Steuereinrichtung (3) herbeigeführt ist, wobei über die Änderung der Materialeigenschaft des Schaltmittels (9) wenigstens ein elektrischer Stromkreis schließbar ist, über welchen die Steuereinrichtung (3) mit elektrischer Energie versorgbar ist.

2. Energiespeicheranordnung nach Anspruch 1,
**dadurch gekennzeichnet,**
**dass** die Steuereinrichtung (3) bei Inbetriebnahme über das Schließen des Stromkreises dazu ausgebildet ist, wenigstens eine Maßnahme zur Temperierung, insbesondere Kühlung, des Energiespeichers (4) herbeizuführen und/oder wenigstens eine Warninformation auszugeben.

3. Energiespeicheranordnung nach Anspruch 2,
**dadurch gekennzeichnet,**
**dass** die Warninformation über ein Ausgabemittel einer die Energiespeicheranordnung (1) umfassenden Vorrichtung, insbesondere eines Kraftfahrzeugs (2), und/oder über an die Umgebung der die Energiespeicheranordnung (1) umfassenden Vorrichtung gebbar sein.

4. Energiespeicheranordnung nach einem der vorangehenden Ansprüche,
**dadurch gekennzeichnet,**
**dass** das Schaltmittel in Abhängigkeit der Temperatur seine magnetischen Eigenschaften verändert, wobei es unterhalb einer spezifischen Grenztemperatur ferromagnetische Eigenschaften und oberhalb der spezifischen Grenztemperatur keine ferromagnetischen Eigenschaften aufweist.

5. Energiespeicheranordnung nach Anspruch 4,
**dadurch gekennzeichnet,**
**dass** das Schaltmittel aus einer Nickel-Eisen-Legierung gebildet ist, wobei die Curie Temperatur der Legierung in einem Bereich zwischen 20 und 100°C, bevorzugt in einem Bereich zwischen 50 und 80°C, liegt.

6. Energiespeicheranordnung nach einem der Ansprüche 1 bis 3,
**dadurch gekennzeichnet,**
**dass** das Schaltmittel in Abhängigkeit der Temperatur seine elektrische Leitfähigkeit verändert, wobei es unterhalb einer spezifischen Temperatur elektrisch isolierende Eigenschaften und oberhalb der spezifischen Grenztemperatur elektrisch leitfähige Eigenschaften aufweist.

7. Energiespeicheranordnung nach Anspruch 6,
**dadurch gekennzeichnet,**
**dass** das Schaltmittel (9) aus einem Halbleiter, insbesondere Heißleiter, bevorzugt (Fe₂O₃), ZnTiO₄, MgCr₂O₄., gebildet ist.

8. Energiespeicheranordnung nach Anspruch 6 oder 7,
**dadurch gekennzeichnet,**
**dass** die Grenztemperatur in einem Bereich zwischen 20 und 100°C, bevorzugt in einem Bereich zwischen 50 und 80°C liegt.

9. Energiespeicheranordnung nach einem der Ansprüche 1 bis 3,
**dadurch gekennzeichnet,**
**dass** das Schaltmittel (9) aus einem Bitmetallstreifen gebildet ist oder einen Bimetallstreifen umfasst, welcher bei Überschreiten einer spezifischen Grenztemperatur eine bestimmte Formänderung zeigt.

10. Energiespeicheranordnung nach Anspruch 9,
**dadurch gekennzeichnet,**
**dass** die Grenztemperatur in einem Bereich zwischen 20 und 100°C, bevorzugt in einem Bereich zwischen 50 und 80°C liegt.

11. Kraftfahrzeug (2), umfassend wenigstens eine Energiespeicheranordnung (1) nach einem der vorangehenden Ansprüche.

## Claims

1. Energy storage arrangement (1) comprising an electrical energy storage (4), a control device (3) assigned thereto, which, in the operating state, is designed to determine control information relevant to the operation of the energy storage (4), and a switching device (8) which is assigned to the control device (3) and which, in the nonoperating state of the control device (3), is designed to start up the control device (3),
**characterised in that**
the switching device (8) comprises at least one temperature-sensitive switching means (9) which, when a specific threshold temperature is exceeded, changes at least one material property in such a way that the control device (3) is started up by way of the switching device (7), wherein by way of the change in the material property of the switching means (9) at least one electric circuit can be closed, by way of which the control device (3) can be supplied with electrical energy.

2. Energy storage arrangement according to claim 1,
**characterised in that**,
when in operation by means of the closing of the electrical circuit, the control device (3) is designed to perform at least one measure for tempering, in particular cooling, of the energy storage (4), and/or to output at least one item of warning information.

3. Energy storage arrangement according to claim 2,
**characterised in that**
the warning information can be outputted by way of an output means of a device, which includes the energy storage arrangement (1), in particular of a motor vehicle (2), and/or can be emitted to the environment of the device which includes the energy storage arrangement (1).

4. Energy storage arrangement according to any one of the preceding claims,
**characterised in that**
the switching means changes its magnetic properties depending on the temperature, wherein below a specific threshold temperature it has ferromagnetic properties and above the specific threshold temperature it has no ferromagnetic properties.

5. Energy storage arrangement according to claim 4,
**characterised in that**
the switching means is made of a nickel-iron alloy, wherein the Curie temperature of the alloy is in a range between 20 and 100°C, preferably in a range between 50 and 80°C.

6. Energy storage arrangement according to any one of claims 1 to 3,
**characterised in that**
the switching means changes its electrical conductivity depending on the temperature, wherein below a specific temperature it has electrically insulating properties and above the specific threshold temperature it has electrically conductive properties.

7. Energy storage arrangement according to claim 6,
**characterised in that**
the switching means (9) is formed from a semi-conductor, in particular hightemperature conductor, preferably (Fe₂O₃), ZnTiO₄, MgCr₂O₄.

8. Energy storage arrangement according to claim 6 or 7,
**characterised in that** the threshold temperature is in a range between 20 and 100°C, preferably in a range between 50 and 80°C.

9. Energy storage arrangement according to any one of claims 1 to 3,
**characterised in that** the switching means (9) is formed from a bimetallic strip or can include a bimetallic strip, which undergoes a defined change in shape when a specific threshold temperature is exceeded.

10. Energy storage arrangement according to claim 9,
**characterised in that**
the threshold temperature is in a range between 20 and 100°C, preferably in a range between 50 and 80°C.

11. Motor vehicle (2) comprising at least one energy storage arrangement (1) according to any one of the preceding claims.

## Revendications

1. Dispositif accumulateur d'énergie (1), comprenant un accumulateur d'énergie électrique (4), un dispositif de commande (3) qui est associé à celui-ci et qui est conçu pour, lors du fonctionnement, déterminer des informations de commande concernant le fonctionnement de l'accumulateur d'énergie (4) ainsi qu'un dispositif de commutation (8) qui est associé au dispositif de commande (3) et qui est conçu pour, à partir du non-fonctionnement du dispositif de commande (3), mettre en service le dispositif de commande (3),
**caractérisé en ce que** le dispositif de commutation (8) comprend au moins un moyen de commutation (9) qui est sensible à la température et qui, lorsqu'une température limite spécifique est dépassée, modifie au moins une propriété matérielle de telle sorte qu'une mise en service du dispositif de commande (3) est déclenchée par l'intermédiaire du dispositif de commutation (7), au moins un circuit de courant électrique par l'intermédiaire duquel le dispositif de commande (3) peut être alimenté en énergie électrique pouvant alors être fermé par l'intermédiaire de la modification de la propriété matérielle du moyen de commutation (9).

2. Dispositif accumulateur d'énergie selon la revendication 1, **caractérisé en ce que** le dispositif de commande (3) est conçu pour, lors de la mise en service via la fermeture du circuit de courant, déclencher au moins une mesure destinée à tempérer, en particulier à refroidir, l'accumulateur d'énergie (4) et/ou à délivrer au moins une information d'avertissement.

3. Dispositif accumulateur d'énergie selon la revendication 2, **caractérisé en ce que** l'information d'avertissement peut être donnée par l'intermédiaire d'un moyen de sortie d'un dispositif comprenant le dispositif accumulateur d'énergie (1), en particulier d'un véhicule automobile (2), et/ou à l'environnement du dispositif comprenant le dispositif accumulateur d'énergie (1).

4. Dispositif accumulateur d'énergie selon l'une des revendications précédentes, **caractérisé en ce que** le moyen de commutation modifie ses propriétés magnétiques en fonction de la température du fait que, au-dessous d'une température limite spécifique, il présente des propriétés ferromagnétiques et, au-dessus de la température limite spécifique, il ne présente pas de propriété ferromagnétique.

5. Dispositif accumulateur d'énergie selon la revendication 4, **caractérisé en ce que** le moyen de commutation est formé d'un alliage nickel-fer, la température de Curie de l'alliage étant comprise entre 20 et 100 °C, de préférence entre 50 et 80 °C.

6. Dispositif accumulateur d'énergie selon l'une des revendications 1 à 3, **caractérisé en ce que** le moyen de commutation modifie sa conductibilité électrique en fonction de la température du fait que, au-dessous d'une température spécifique, il présente des propriétés électriquement isolantes et, au-dessus de la température limite spécifique, il présente des propriétés électriquement conductrices.

7. Dispositif accumulateur d'énergie selon la revendication 6, **caractérisé en ce que** le moyen de commutation (9) est formé d'un semi-conducteur, en particulier d'un thermistor, de préférence (Fe₂O₃), ZnTiO₄, MgCr₂O₄.

8. Dispositif accumulateur d'énergie selon la revendication 6 ou 7, **caractérisé en ce que** la température limite est comprise entre 20 et 100 °C, de préférence entre 50 et 80 °C.

9. Dispositif accumulateur d'énergie selon l'une des revendications 1 à 3, **caractérisé en ce que** le moyen de commutation (9) est formé d'une lame bimétal ou comprend une lame bimétal qui présente une modification de forme déterminée lors du dépassement d'une température limite spécifique.

10. Dispositif accumulateur d'énergie selon la revendication 9, **caractérisé en ce que** la température limite est comprise entre 20 et 100 °C, de préférence entre 50 et 80 °C.

11. Véhicule automobile (2), comprenant au moins un dispositif accumulateur d'énergie (1) selon l'une des revendications précédentes.
